# DEMANDE DE BREVET EUROPEEN

(11) **EP 4 497 647 A1**
(43) Date de publication de la demande: **29.01.2025**
(21) Numéro de dépôt: 24190560.3
(22) Date de dépôt: 24.07.2024
(51) Int. Cl.: B61C 9/48, F16C 33/66, F16C 35/04, F16C 35/067

(54) **PALIER D'ENTRAÎNEMENT ET MOTEUR COMPRENANT UN TEL PALIER**

(30) Priorité: 25.07.2023 FR 2308014
(71) Demandeur: ALSTOM Holdings, 93400 Saint-Ouen-sur-Seine (FR)
(72) Inventeur: ROBBE, Gilles, 25660 MONTFAUCON (FR)
(74) Mandataire: Lavoix

(57) **Abrégé**

L'invention concerne un palier d'entraînement d'un arbre, le palier d'entraînement (18) étant destiné à être lubrifié par un fluide de lubrification et comprenant un organe de guidage en rotation de l'arbre autour d'un axe transversal qui délimite un logement traversant le long de l'axe transversal pour recevoir l'arbre ; une entrée du fluide de lubrification dans le palier d'entraînement ; une sortie du fluide de lubrification à l'extérieur du palier d'entraînement ; une chambre annulaire d'alimentation en fluide de lubrification de l'organe de guidage, agencée circonférentiellement autour de l'axe transversal en aval de l'entrée et en amont de la sortie par rapport à la circulation du fluide de lubrification.

Le palier d'entraînement comprend une chambre annulaire de répartition du fluide de lubrification dans laquelle débouche l'entrée et agencée circonférentiellement autour de l'axe transversal en aval de l'entrée et en amont de la chambre d'alimentation ; un répartiteur annulaire de fluide de lubrification agencé circonférentiellement autour de l'axe transversal s'étendant entre la chambre de répartition et la chambre d'alimentation et comprenant une portion mobile déplaçable entre une position déployée dans laquelle le répartiteur ferme la chambre de répartition et une position rétractée dans laquelle le répartiteur autorise le passage du fluide de lubrification de la chambre de répartition dans la chambre d'alimentation.

## Description

La présente invention concerne un palier d'entraînement d'un arbre, notamment d'un moteur de traction d'un véhicule ferroviaire, l'arbre s'étendant selon un axe transversal, le palier d'entraînement étant destiné à être lubrifié par un fluide de lubrification, le palier d'entraînement comprenant :
- un organe de guidage en rotation de l'arbre autour de l'axe transversal, l'organe de guidage présentant une forme annulaire et s'étendant circonférentiellement autour de l'axe transversal, l'organe de guidage délimitant un logement traversant le long de l'axe transversal, le logement étant configuré pour recevoir l'arbre,
- une entrée du fluide de lubrification dans le palier d'entraînement,
- une sortie du fluide de lubrification à l'extérieur du palier d'entraînement, le fluide de lubrification étant apte à circuler depuis l'entrée vers la sortie en passant à travers l'organe de guidage,
- une chambre annulaire d'alimentation en fluide de lubrification de l'organe de guidage, la chambre annulaire d'alimentation étant agencée circonférentiellement autour de l'axe transversal en aval de l'entrée et en amont de la sortie par rapport à la circulation du fluide de lubrification, l'organe de guidage étant agencé dans la chambre annulaire d'alimentation.

La présente invention concerne également un moteur pour un véhicule ferroviaire comprenant un tel palier d'entraînement.

L'organe de guidage de ce type de palier doit être lubrifié notamment au moyen d'un fluide de lubrification tel que de la graisse. Au bout d'un certain temps de fonctionnement de l'organe de guidage, il doit être de nouveau graissé ou, autrement dit, il est nécessaire de remplacer la graisse existante recouvrant l'organe de guidage par de la nouvelle graisse, aussi appelée « graisse neuve », au cours d'une opération de lubrification du palier d'entraînement.

Actuellement, selon un type d'opération de lubrification le moteur est à l'arrêt et l'arbre est statique.

Dans un palier d'entraînement connu, l'organe de guidage est agencé entre une entrée de graisse dans le palier d'entraînement, située en amont de l'organe de guidage, et une sortie de graisse du palier d'entraînement, située en aval de l'organe de guidage. Les termes « amont » et « aval » sont ici définis par rapport au trajet de la graisse depuis l'entrée vers la sortie en passant par l'organe de guidage.

Dans ce type de palier d'entraînement connu, le trajet parcouru par la graisse neuve entre l'entrée de graisse et la sortie de graisse est tel que la graisse suit le trajet le plus court dans le palier d'entraînement entre l'entrée et la sortie de graisse. En particulier, la graisse neuve injectée dans l'entrée circule le long d'un passage localisé au droit de l'entrée, atteint l'organe de guidage et ressort par la sortie.

Il en résulte qu'une faible portion de l'organe de guidage est graissée par la graisse neuve. Il est entendu ici par « faible portion », un secteur angulaire limité de l'organe de guidage. Un tel secteur angulaire limité est inférieur ou égal à 30 degrés.

Ceci conduit à donc un remplacement local de graisse autour et dans l'organe de guidage.

Il en résulte donc un graissage limité de l'organe de guidage par de la graisse neuve. Un tel graissage limité par de la graisse neuve nécessite de procéder à des opérations de lubrification du palier d'entraînement par de la graisse neuve à des intervalles rapprochés pour assurer la longévité de l'organe de guidage de l'arbre.

La fréquence élevée des opérations de lubrification aussi appelées opérations de re-graissage du palier d'entraînement par de la graisse neuve induit un plan de maintenance du moteur contraignant et de longues périodes de mise à l'arrêt du moteur.

Lors d'autres types d'opération de lubrification par de la graisse neuve, il est nécessaire de faire tourner manuellement l'arbre. Au cours de cette opération, il est nécessaire de procéder au levage de l'essieu du véhicule formé en partie par l'arbre. Une telle opération nécessite au moins deux opérateurs. L'un des opérateurs tourne l'essieu et l'autre actionne une pompe à graisse.

L'opération de lubrification en faisant tourner l'arbre permet d'injecter de la graisse neuve sur la circonférence entière de l'organe de guidage.

Toutefois, une telle opération de lubrification entraîne également une maintenance contraignante du palier d'entraînement. En effet, l'opération de lubrification nécessite de mobiliser deux opérateurs. En outre, une telle opération est relativement fastidieuse, notamment du fait qu'il est nécessaire de lever l'essieu. En outre, il n'est pas toujours possible de procéder au levage de l'essieu.

Un but de la présente invention est donc de permettre la lubrification de l'organe de guidage avec un fluide de lubrification neuf de manière plus simple et plus efficace tout en assurant une bonne lubrification de l'organe de guidage afin d'en assurer la longévité.

A cet effet, l'invention concerne un palier d'entraînement d'un arbre du type précité, une chambre annulaire de répartition du fluide de lubrification dans laquelle débouche l'entrée, la chambre annulaire de répartition étant agencée circonférentiellement autour de l'axe transversal en aval de l'entrée et en amont de la chambre d'alimentation par rapport à la circulation du fluide de lubrification, et
- un répartiteur annulaire de fluide de lubrification agencé circonférentiellement autour de l'axe transversal s'étendant entre la chambre de répartition et la chambre d'alimentation, le répartiteur comprenant une portion mobile déplaçable entre une position déployée dans laquelle le répartiteur ferme la chambre annulaire de répartition de sorte à répartir le fluide de lubrification dans une portion de la chambre annulaire de répartition et une position rétractée dans laquelle le répartiteur autorise le passage du fluide de lubrification de la chambre annulaire de répartition dans la chambre annulaire d'alimentation.

Grâce à l'invention, le répartiteur de fluide de lubrification force le fluide de lubrification à se répartir circonférentiellement autour de l'axe transversal dans la chambre de répartition. Autrement dit, dans un plan de coupe perpendiculaire à la direction longitudinale, le fluide de lubrification est réparti angulairement tout autour de l'organe de guidage dans la chambre de répartition avant d'entrer en communication fluidique avec ledit organe de guidage.

En effet, le répartiteur dans la position déployée permet d'assurer le remplissage optimal du fluide de lubrification dans la chambre annulaire de répartition, c'est-à-dire équitablement réparti circonférentiellement autour de l'axe transversal X. Dans la position rétractée, le répartiteur permet la communication fluidique du fluide de lubrification équitablement réparti circonférentiellement autour de l'axe transversal X dans la chambre annulaire de répartition dans la chambre d'alimentation.

Ainsi, une fois que le répartiteur passe de la position déployée dans la position rétractée, le fluide de lubrification se déverse dans la chambre annulaire d'alimentation pour remplir un secteur angulaire de la chambre annulaire d'alimentation plus important que le secteur angulaire des paliers de l'état de la technique. Une telle répartition du fluide de lubrification dans la chambre annulaire de répartition permet donc de recouvrir un secteur angulaire élargi de l'organe de guidage par rapport au secteur angulaire limité de l'état de la technique.

Grâce à l'invention, un seul opérateur est nécessaire afin de procéder à la lubrification du palier et non plus deux opérateurs comme cela est le cas dans l'état de la technique.

En outre, grâce à l'invention, il n'est pas nécessaire de procéder au levage de l'essieu ce qui simplifie l'opération de lubrification et qui permet de réaliser l'opération de lubrification dans tout centre de maintenance du véhicule, un système de levage de l'essieu n'étant pas requis.

Suivant des modes particuliers de réalisation, le palier d'entraînement présente l'une ou plusieurs des caractéristiques suivantes, prises seules ou selon toutes les combinaisons techniquement envisageables :
- la portion mobile dans la position déployée présente une forme biseautée dans un plan de coupe transversal comprenant l'axe transversal ;
   - la portion mobile est configurée pour passer de la position déployée à la position rétractée lorsque le fluide de lubrification dans la chambre annulaire de répartition exerce une pression prédéterminée sur la portion mobile ;
   - la portion mobile dans la position déployée présente une forme annulaire, la portion mobile s'étendant circonférentiellement autour de l'axe transversal ;
   - la portion mobile du répartiteur présente au moins une première zone et une deuxième zone distincte de la première zone, la première zone définissant un premier secteur angulaire non nul de la portion mobile et la deuxième zone définissant une deuxième secteur angulaire non nul de la portion mobile, la première zone de la portion mobile du répartiteur étant configurée pour passer de la position déployée à la position rétractée lorsque le fluide de lubrification dans la chambre annulaire de répartition exerce une première pression prédéterminée sur ladite première zone et la deuxième zone de la portion mobile du répartiteur étant configurée pour passer de la position déployée à la position rétractée lorsque le fluide de lubrification dans la chambre annulaire de répartition exerce une deuxième pression prédéterminée sur la deuxième zone, la première pression prédéterminée étant distincte de la deuxième pression prédéterminée ;
   - le répartiteur présente, en outre, une portion fixe par rapport à la portion mobile, la portion mobile étant venue de matière avec la portion fixe et étant flexible par rapport à la portion fixe ;
   - la chambre annulaire d'alimentation et la chambre annulaire de répartition sont délimitées au moins en partie par une première paroi et une deuxième paroi séparées l'une de l'autre selon la direction transversale, le répartiteur s'étendant entre la première paroi et la deuxième paroi, la portion fixe étant agencée contre la première paroi et la portion mobile étant agencée en contact avec la deuxième paroi dans la position déployée du répartiteur, la portion fixe étant agencée contre la première paroi et la portion mobile étant agencée à distance de la deuxième paroi dans la position rétractée du répartiteur ;
   - la première paroi présente une gorge dans laquelle le répartiteur est monté ; et
   - la portion mobile et la deuxième paroi délimitent entre eux un passage du fluide de lubrification de la chambre annulaire de répartition dans la chambre annulaire d'alimentation dans la position rétractée de la portion mobile, une distance séparant l'axe transversal du passage étant strictement supérieure à une distance séparant l'axe transversal de l'organe de guidage.

L'invention concerne également un moteur pour un véhicule ferroviaire comprenant:
- un carter,
- un arbre s'étendant transversalement selon la direction transversale, l'arbre étant monté mobile en rotation par rapport au carter autour de l'axe transversal et l'arbre traversant le carter,
- un palier d'entraînement selon l'une quelconque des revendications précédentes, le palier d'entraînement étant monté entre le carter et l'arbre pour guider la rotation de l'arbre par rapport au carter, et
   - un dispositif d'injection d'au moins un fluide de lubrification du palier d'entraînement.

D'autres aspects et avantages de l'invention apparaitront à la lecture de la description qui suit, donnée à titre d'exemple et faite en référence aux dessins annexés, dans lesquels :
la figure 1 est une vue schématique en coupe longitudinale d'un moteur selon l'invention,
la figure 2 est une vue de détail d'une moitié d'un palier d'entraînement du moteur de la figure 1,
la figure 3 est une vue schématique en coupe transversale du palier de la figure 1, repérée par le plan de coupe III-III, identifié sur la figure 2,
la figure 4 est une vue de détail d'une partie de la figure 2 dans lequel une portion mobile d'un répartiteur du palier d'entraînement est dans une position déployée, et la figure 5 montre la portion mobile de la figure 4 dans une position rétractée.

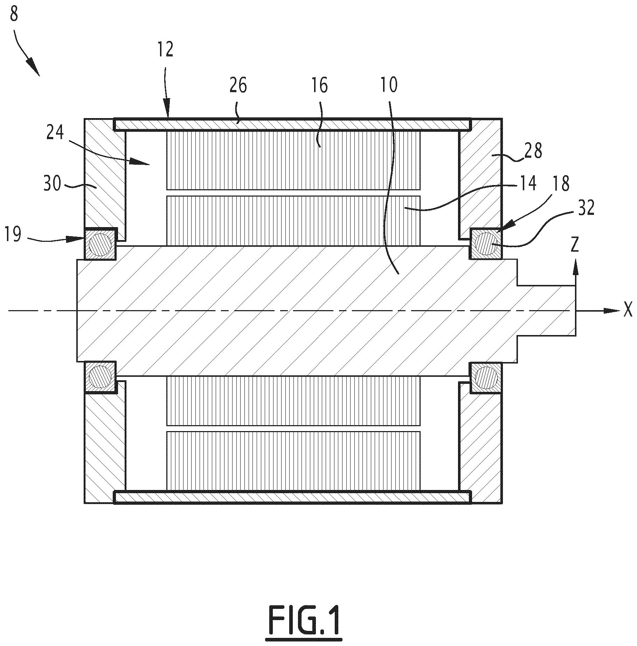

En référence à la figure 1, un moteur 8 pour un véhicule est décrit.

Le moteur est, par exemple, un moteur 8 d'un véhicule ferroviaire. Alternativement, le moteur 8 est un moteur de n'importe quel autre type de véhicule.

En outre, le moteur 8 est un moteur de traction compris dans la chaîne de traction du véhicule.

Le moteur 8 est par exemple un moteur électrique tel qu'un moteur à courant continu ou à courant alternatif, un moteur à combustion, un moteur à aimant permanent ou encore n'importe quel autre type de moteur de traction.

Dans le cas d'espèce, le moteur 8 est un moteur électrique.

Le moteur 8 est par exemple adapté pour entraîner en rotation au moins un essieu du véhicule. Un essieu comprend communément un arbre aux extrémités duquel sont montées des roues du véhicule.

Le moteur 8 comprend un carter 12, encore appelé « bâti », un arbre 10, un rotor 14, un stator 16, au moins un palier d'entraînement 18 de l'arbre 10, et un dispositif d'injection d'un fluide de lubrification 22 dans le palier d'entraînement 18 (non visible sur les figures).

Dans la suite de la présente description, il est défini un axe transversal orienté, noté « axe transversal X » et définissant une direction transversale X. L'axe transversal X correspond par exemple à la direction d'espacement de deux roues avant ou de deux roues arrière du véhicule, portées par un même essieu.

Il est aussi défini un axe d'élévation Z orienté, perpendiculaire à l'axe transversal X et définissant une direction d'élévation Z. La direction d'élévation Z est par exemple verticale lorsque le véhicule est sur un sol horizontal.

En outre, il est défini un plan de coupe transversal perpendiculaire à l'axe transversal X. Il est en outre défini un plan de coupe longitudinal défini par l'axe transversal X et l'axe d'élévation Z.

En outre, dans la présente description, le terme « hauteur » est défini relativement à l'orientation de l'axe d'élévation Z.

Le carter 12 délimite un espace interne 24.

Le carter 12 comprend, par exemple, un corps principal 26 tubulaire s'étendant le long de la direction transversal X. En outre, le carter 12 comprend, par exemple, un premier flasque 28 et un deuxième flasque 30 agencés à chacune des extrémités du corps principal 26 selon la direction transversale X.

Le premier flasque 28 et le deuxième flasque 30 s'étendent sensiblement perpendiculairement à l'axe transversal X. En outre, le premier flasque 28 et le deuxième flasque 30 obturent au moins en partie le corps principal 26 tubulaire.

Le premier flasque 28 et le deuxième flasque 30 délimitent chacun un orifice de passage de l'arbre 10.

Le corps principal 26, le premier flasque 28 et le deuxième flasque 30 délimitent l'espace interne 24 du carter 12.

Le rotor 14 est agencé dans l'espace interne 24.

Le rotor 14 est monté mobile en rotation autour de l'axe transversal X par rapport au stator 16. En outre, le rotor 14 est monté solidaire en rotation de l'arbre 10.

Selon l'exemple décrit, le rotor 14 présente une forme cylindrique centrée sur l'axe transversal X.

En outre, le rotor 14 présente un orifice central s'étendant le long de l'axe transversal X dans lequel est inséré l'arbre 10.

Le stator 16 est logé dans l'espace interne 24.

Le stator 16 est agencé circonférentiellement autour du rotor 14.

En outre, le rotor 14 et le stator 16 sont coaxiaux d'axe X.

De façon classique, le rotor 14 et le stator 16 permettent de transformer une énergie électrique en énergie mécanique délivrée par l'arbre 10 et destinée à entraîner des essieux du véhicule ferroviaire.

L'arbre 10 s'étend transversalement selon la direction transversale X et est mobile en rotation par rapport au carter 12 autour de l'axe transversal X.

L'arbre 10 traverse le carter 12.

L'arbre 10 est inséré dans les orifices de passage ménagés dans les premier et deuxième flasques 28, 30 et présente une partie logée dans l'espace interne 24.

L'arbre 10 est monté mobile en rotation par rapport au carter 12 autour de l'axe transversal X par l'intermédiaire du palier d'entraînement 18. Le palier d'entraînement 18 est adapté pour guider l'arbre 10 en rotation autour de l'axe transversal X.

Dans le cas d'espèce, le moteur 8 comprend deux paliers d'entraînement, notés premier palier d'entraînement 18 et deuxième palier d'entraînement 19, adaptés pour guider l'arbre 10 en rotation autour de l'axe transversal X. Les paliers d'entraînement 18, 19 sont représentés de manière schématique sur la figure 1.

Le premier palier d'entraînement 18 est monté entre le premier flasque 28 et l'arbre 10. Le deuxième palier d'entraînement 19 est monté entre le deuxième flasque 30 et l'arbre 10.

En particulier, l'arbre 10 traverse le premier palier 18 et le deuxième palier 19.

Dans la suite de la présente description, seul le premier palier d'entraînement 18 est décrit. Le deuxième palier d'entraînement 19 n'est pas décrit dans le détail car il est analogue structurellement au premier palier d'entraînement 18 décrit ci-après. Dans la suite, le premier palier d'entraînement 18 est nommé de manière générique par le terme « palier d'entraînement 18 ».

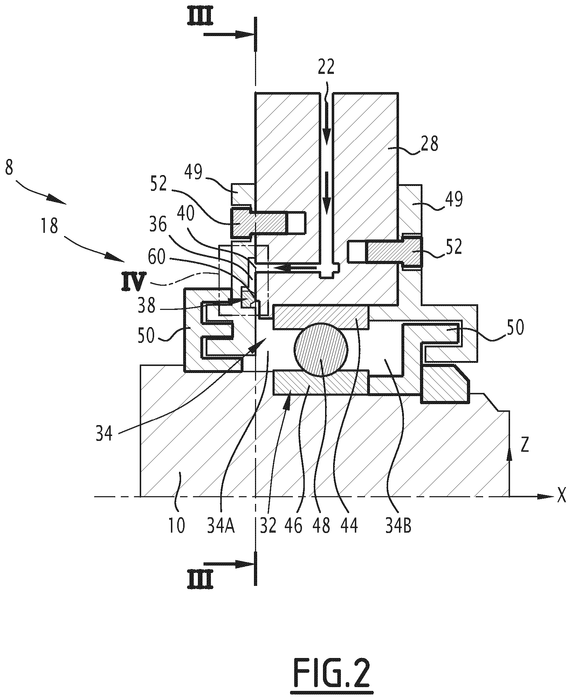

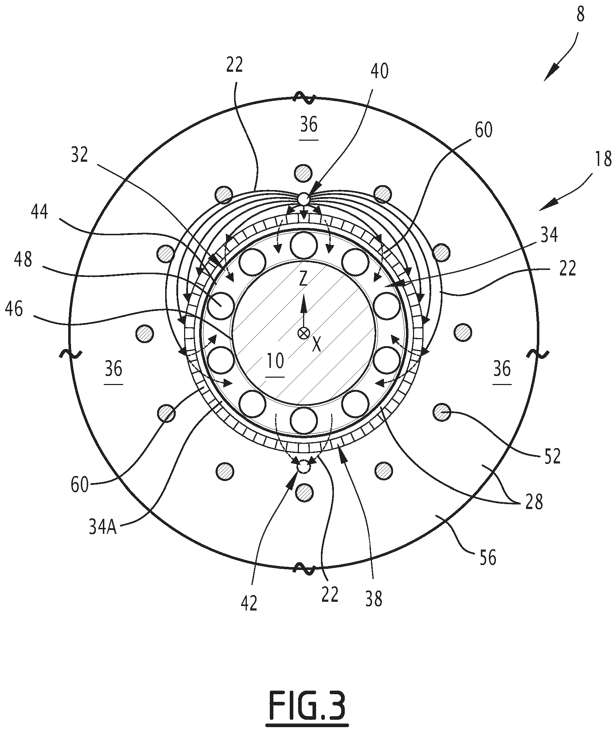

Le palier d'entraînement 18 est décrit en référence aux figures 2 à 5. Il est à noter que la figure 2 est une vue montrant la moitié du palier d'entraînement 18 comprenant une entrée dans le palier d'entraînement 18. L'autre moitié du palier d'entraînement 18 est visible sur la figure 3 et comprend la sortie 42 du palier d'entraînement.

Le palier d'entraînement 18 comprend un organe de guidage 32 en rotation de l'arbre 10 autour de l'axe transversal X, une chambre annulaire d'alimentation 34 du palier d'entraînement 18 en fluide de lubrification 22 (ci-après appelée « chambre d'alimentation 34 »), une chambre annulaire de répartition 36 du fluide de lubrification 22 (ci-après appelée « chambre de répartition 36 »), un répartiteur 38 de fluide de lubrification 22, une entrée 40 de fluide de lubrification 22 dans le palier d'entraînement 18, et une sortie 42 du fluide de lubrification 22 à l'extérieur du palier d'entraînement 18.

Avantageusement, la chambre d'alimentation 34, la chambre de répartition 36 et le répartiteur 38 sont coaxiaux d'axe transversal X.

Préférentiellement, l'organe de guidage 32, la chambre d'alimentation 34, la chambre de répartition 36 et le répartiteur 38 sont coaxiaux d'axe transversal X.

L'organe de guidage 32 est intercalé entre le premier flasque 28 et l'arbre 10.

L'organe de guidage 32 est monté mobile en rotation autour de l'axe transversal X.

L'organe de guidage 32 est adapté pour guider en rotation l'arbre 10 autour de l'axe transversal X.

L'organe de guidage 32 est au moins en partie solidaire en rotation de l'arbre 10.

L'organe de guidage 32 délimite un logement traversant le long de l'axe transversal X adapté pour recevoir une partie de l'arbre 10.

L'organe de guidage 32 présente une forme annulaire et s'étend circonférentiellement autour de l'axe transversal X. Ainsi, l'organe de guidage 32 s'étend angulairement sur 360 degrés autour de l'axe transversal X.

L'organe de guidage 32 s'étend circonférentiellement autour de l'arbre 10.

L'organe de guidage 32 est, par exemple, un organe de guidage 32 à roulement.

A titre d'exemple, l'organe de guidage 32 comprend une bague fixe 44 annulaire, une bague mobile 46 annulaire et des éléments rotatifs 48.

La bague fixe 44 est solidaire du premier flasque 28.

La bague fixe 44 et la bague mobile 46 sont coaxiales et délimitent entre elles un espace de réception des éléments rotatifs 48.

La bague mobile 46 est montée mobile en rotation par rapport à la bague fixe 44 et est solidaire en rotation de l'arbre 10.

La bague mobile 46 délimite le logement traversant de l'organe de guidage 32.

Les éléments rotatifs 48 sont agencés entre la bague fixe 44 et la bague mobile 46.

Selon un exemple particulier, l'organe de guidage 32 est un roulement à billes. Dans ce cas spécifique, les éléments rotatifs 48 sont des billes.

Selon d'autres exemples, les éléments rotatifs 48 peuvent être des cylindres ou tout élément rotatif équivalent. Ce type d'organe de guidage est communément appelé « roulement à rouleaux ».

L'organe de guidage 32 est monté sur le premier flasque 28 par l'intermédiaire d'au moins un déflecteur fixe 49 et d'au moins un déflecteur tournant 50.

Le déflecteur fixe 49 est solidaire de la bague fixe 44 de l'organe de guidage 32 et est assemblé sur le premier flasque 28, par exemple par des vis 52.

Le déflecteur tournant 50 est solidaire de la bague mobile de l'organe de guidage 32 et fixé à l'arbre 10.

Comme visible sur la figure 2, l'organe de guidage 32 est agencé à l'intérieur de la chambre d'alimentation 34.

Le fluide de lubrification 22 est apte à circuler à travers l'organe de guidage 32.

En outre, en référence à la figure 2, dans le plan de coupe longitudinal, l'organe de guidage 32 sépare la chambre d'alimentation 34 en une chambre d'alimentation amont 34A et une chambre d'alimentation aval 34B.

Dans la présente description, les termes « amont » et « aval » sont définis par rapport à un sens de circulation du fluide de lubrification 22 depuis l'entrée 40 vers la sortie 42.

Le fluide de lubrification 22 est apte à circuler de la chambre d'alimentation amont 34A dans la chambre d'alimentation aval 34B en passant à travers l'organe de guidage 32.

La chambre d'alimentation amont 34A est reliée à l'entrée 40 et la chambre d'alimentation aval 34B est reliée à la sortie 42. Cet agencement permet de faire circuler le fluide de lubrification 22 à travers l'organe de guidage 32.

La chambre d'alimentation 34 présente une forme annulaire.

Une face du répartiteur 38 forme une paroi de la chambre d'alimentation 34.

En outre, la chambre d'alimentation 34 s'étend circonférentiellement autour de l'axe transversal X. Autrement dit, la chambre d'alimentation 34 s'étend angulairement autour de l'axe transversal.

La chambre d'alimentation 34 s'étend angulairement sur 360 degrés autour de l'axe transversal X.

La chambre d'alimentation 34 est agencée en aval de l'entrée 40 et en amont de la sortie 42.

Comme visible sur la figure 3, la chambre d'alimentation 34 communique fluidiquement avec la sortie 42. En particulier, la chambre d'alimentation aval 34B communique fluidiquement avec la sortie 42.

La chambre de répartition 36 du fluide de lubrification 22 présente une forme annulaire.

La chambre de répartition 36 dans laquelle débouche l'entrée 40 est agencée circonférentiellement autour de l'axe transversal X. Autrement dit, la chambre de répartition 36 s'étend angulairement autour de l'axe transversal X.

La chambre de répartition 36 s'étend angulairement sur 360 degrés autour de l'axe transversal X.

Comme visible sur la figure 2, la chambre de répartition 36 communique fluidiquement avec l'entrée 40.

La chambre de répartition 36 est agencée en aval de l'entrée 40.

La chambre de répartition 36 est agencée en amont de la chambre d'alimentation 34.

La chambre de répartition 36 est agencée en amont de l'organe de guidage 32.

Comme visible sur la figure 2, la chambre de répartition 36 est agencée entre l'entrée 40 de fluide de lubrification 22 et le répartiteur 38.

Une autre face du répartiteur 38 forme une paroi de la chambre de répartition 36.

La chambre de répartition 36 est agencée à la périphérie de la chambre d'alimentation 34. Autrement dit, dans le plan de coupe transversal, la distance séparant l'axe transversal X et la chambre de répartition 36 est strictement supérieure à la distance séparant l'axe transversal X et la chambre de d'alimentation 34.

Par exemple, la chambre de répartition 36 est en partie agencée en vis-à-vis de la chambre d'alimentation 34 selon la direction d'élévation Z et en partie décalée par rapport à la chambre d'alimentation 34 selon la direction transversale X comme cela est visible sur la figure 2.

Selon un autre exemple, la chambre de répartition 36 est agencée en vis-à-vis de la chambre d'alimentation 34 selon la direction d'élévation Z.

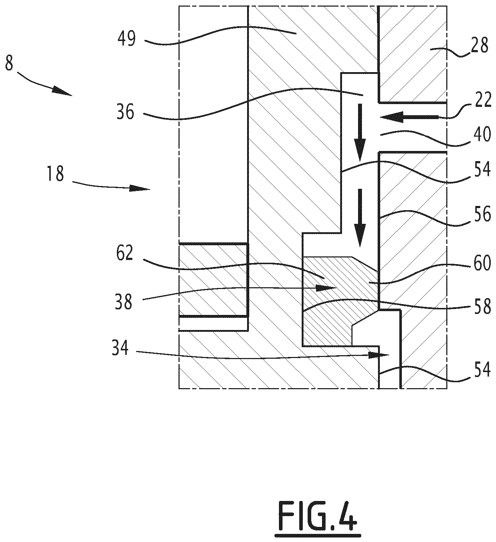

En référence à la figure 4, la chambre annulaire d'alimentation 34 et la chambre annulaire de répartition 36 sont délimitées au moins en partie par une première paroi 54 et une deuxième paroi 56 séparées l'une de l'autre selon la direction transversale X.

Dans le cas d'espèce, une paroi interne du déflecteur fixe 49 définit la première paroi 54 et une paroi interne du premier flasque 28 définit la deuxième paroi 56.

En outre, la chambre d'alimentation 34 et la chambre de répartition 36 sont rendues étanches par le système de déflecteur fixe 49 et de déflecteur tournant 50.

Comme visible sur la figure 3, le répartiteur 38 présente une forme annulaire.

Le répartiteur 38 est agencé circonférentiellement autour de l'axe transversal X. Autrement dit, le répartiteur 38 s'étend angulairement autour de l'axe transversal.

Le répartiteur 38 s'étend sur une distance angulaire de 360 degrés autour de l'axe transversal X.

Le répartiteur 38 s'étend entre la chambre de répartition 36 et la chambre de d'alimentation 34.

Le répartiteur 38 sépare la chambre de répartition 36 et la chambre d'alimentation 34 l'une de l'autre.

En référence à la figure 2, le répartiteur 38 est agencé entre l'entrée 40 et l'organe de guidage 32.

Par exemple, le répartiteur 38 s'étend entre la première paroi 54 et la deuxième paroi 56.

A titre d'exemple, la première paroi 54 fixe présente une gorge 58 dans laquelle est montée le répartiteur 38.

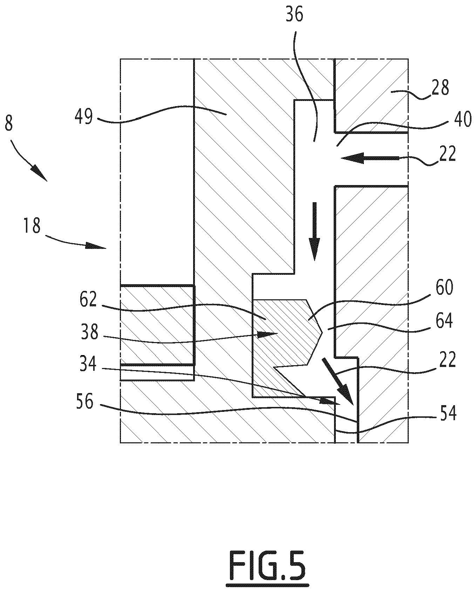

En référence aux figures 4 et 5, le répartiteur 38 comprend au moins une portion mobile 60.

Par exemple, la portion mobile 60 forme une lèvre du répartiteur 38.

La portion mobile 60 est déplaçable entre une position déployée (figure 4) dans laquelle le répartiteur 38 ferme la chambre annulaire de répartition 36 de sorte à répartir le fluide de lubrification 32 dans une portion de la chambre de répartition 36 et une position rétractée (figure 5) par rapport à la position déployée dans laquelle le répartiteur 38 autorise le passage du fluide de lubrification 22 de la chambre de répartition 36 dans la chambre annulaire d'alimentation 34.

Avantageusement, comme visible sur la figure 4, dans la position déployée, le fluide de lubrification 22 ne peut pas circuler depuis la chambre de répartition 36 dans la chambre d'alimentation 34. En effet, le répartiteur 38 bloque le passage du fluide de lubrification 22 de la chambre de répartition 36 dans la chambre d'alimentation 34 de sorte à répartir le fluide de lubrification 22 dans ladite portion de la chambre de répartition 36.

A contrario, comme visible sur la figure 5, dans la position rétractée, le fluide de lubrification 22 peut circuler de la chambre de répartition 36 dans la chambre d'alimentation 34, en particulier de la chambre de répartition 36 dans la chambre d'alimentation amont 34A.

Par exemple, comme visible sur la figure 3, la portion mobile 60 présente une forme annulaire.

Avantageusement, la portion mobile 60 s'étend circonférentiellement sur une distance angulaire de 360 degrés autour de l'axe transversal X.

Pour le passage de la position déployée (figure 4) à la position rétractée (figure 5), la portion mobile 60 est par exemple configurée pour se déplacer en direction d'un intérieur de la chambre d'alimentation 34 ou, encore autrement dit, en direction de l'axe transversal X.

Par exemple, en référence aux figures 4 et 5, le répartiteur 38 comprend, en outre, une portion fixe 62.

Par exemple, la portion fixe 62 présente une forme annulaire.

Avantageusement, la portion fixe 62 s'étend circonférentiellement sur 360 degrés autour de l'axe transversal X.

La portion fixe 62 et la portion mobile 60 sont sensiblement superposées l'une sur l'autre le long de la direction transversale X lorsque le répartiteur 38 est dans la position déployée.

La portion fixe 62 et la portion mobile 60 sont solidaires l'une de l'autre.

Avantageusement, la portion fixe 62 et la portion mobile 60 sont venues de matière.

Dans la position déployée, le répartiteur 38 est en contact contre la première paroi 54 et la deuxième paroi 56.

Dans l'exemple spécifique décrit ici, dans la position déployée, la portion fixe 62 est agencée contre la première paroi 54 et la portion mobile 60 est agencée contre la deuxième paroi 56.

Dans la position rétractée, la portion fixe 62 est agencée contre la première paroi 54 et la portion mobile 60 n'est pas en contact avec la deuxième paroi 56. Autrement dit, la portion mobile 60 est à distance de la deuxième paroi 56.

Comme visible sur la figure 5, dans la position rétractée, la portion mobile 60 délimite avec la deuxième paroi 56 un passage 64 du fluide de lubrification 22 de la chambre de répartition 36 dans la chambre d'alimentation 34.

Le passage 64 débouche dans la chambre d'alimentation 34.

Le passage 64 s'étend sur au moins une portion angulaire autour de l'axe transversal X.

Une distance séparant l'axe transversal X du passage 64 est strictement supérieure à une distance séparant l'axe transversal X de l'organe de guidage 32. La distance séparant l'axe transversal de l'organe de guidage 32 étant défini par le rayon joignant l'axe transversal X au centre de chaque élément rotatif 48.

Avantageusement, lorsque l'ensemble de la portion mobile 60 est dans la position rétractée, le passage 64 est un passage annulaire s'étendant circonférentiellement sur un angle de 360 degrés autour de l'axe transversal X.

Dans le plan de coupe transversal, le passage 64 s'étend autour de l'organe de guidage 32.

La portion mobile 60 du répartiteur 38 est adaptée pour passer de la position déployée à la position rétractée lorsqu'une pression supérieure à une pression prédéterminée est appliquée par le fluide de lubrification 22 dans la chambre annulaire de répartition 36 sur la portion mobile 60.

A titre d'exemple, la pression prédéterminée est comprise entre 20 kilopascal (KPa) et 150 KPa.

Par exemple, la pression prédéterminée est sensiblement égale à 50K Pa.

La pression prédéterminée correspond à la pression du fluide de lubrification 22 dans la chambre de répartition 36 lors d'une opération de lubrification du palier d'entraînement 18.

La pression dans chambre de répartition 36 dépend notamment du débit du fluide de lubrification 22 délivré par le dispositif d'injection, de la viscosité du fluide de lubrification 22, etc.

A titre d'exemple, le fluide de lubrification 22 comprend de la graisse, telle qu'une graisse pour roulements au lithium.

La portion mobile 60 présente une raideur.

La raideur de la portion mobile 60 est telle que la portion mobile 60 du répartiteur 38 est configurée pour passer de la position déployée à la position rétractée lorsqu'une pression supérieure à la pression prédéterminée est appliquée sur la portion mobile 60.

Préférentiellement, la raideur de la portion mobile 60 est choisie pour que l'ensemble de la chambre de répartition soit rempli de fluide de lubrification 22 avant que la portion mobile 60 ne passe de la position déployée à la position rétractée.

A titre d'exemple, la raideur de la portion mobile 60 est comprise entre 20 Shore A et 110 Shore A. A titre d'illustration, la raideur est 80 Shore A.

La portion fixe 62 ne se déforme pas sous l'effet de la pression prédéterminée exercée par le fluide de lubrification 22 lors de l'opération de lubrification du palier.

Par exemple, la portion mobile 60 est flexible par rapport à la portion fixe 62.

A titre d'illustration, la portion mobile 60 est élastiquement déformable entre la position rétractée et la position déployée.

En particulier, la portion mobile 60 est mobile par rapport à la portion fixe 62 entre la position rétractée et la position déployée.

Ainsi, par exemple, pour le passage de la position déployée dans la position rétractée, la portion mobile 60 se déforme élastiquement.

La portion mobile 60 est par exemple déformée élastiquement en direction de l'intérieur de la chambre d'alimentation 34.

Avantageusement, lorsque la pression appliquée par le fluide de lubrification 22 dans la chambre de répartition 36 sur la portion mobile 60 est strictement inférieure à la pression prédéterminée, la portion mobile 60 revient naturellement dans la position déployée.

En référence à la figure 4, selon un exemple de réalisation particulier, dans la position déployée, la portion mobile 60 présente dans le plan de coupe longitudinal une forme biseautée.

La forme biseautée permet d'adapter de manière simple la raideur de la portion mobile 60.

Avantageusement, la portion mobile 60 est réalisée en élastomère.

Par exemple, l'ensemble du répartiteur 38 est réalisé en élastomère.

Par exemple, le répartiteur 38 est un joint. Ainsi, le répartiteur 38 est un joint répartiteur de graisse.

Par exemple, l'entrée 40 est ménagée dans la deuxième paroi 56, c'est-à-dire ici dans une paroi du premier flasque 28. L'entrée 40 est délimitée par un orifice s'étendant sur une zone locale de la deuxième paroi 56.

L'entrée 40 débouche dans la chambre de répartition 36. Autrement dit, l'entrée 40 est en communication fluidique avec la chambre de répartition 36.

L'entrée 40 est agencée en amont du répartiteur 38.

L'entrée 40 présente par exemple une forme circulaire.

La sortie 42 est en communication fluidique avec la chambre d'alimentation aval 34B.

Avantageusement, la sortie 42 est agencée dans le premier flasque 28 à une hauteur inférieure à la hauteur de l'entrée 40 dans une paroi opposée à la paroi du premier flasque 28 dans laquelle l'entrée 40 est ménagée.

En outre, la sortie 42 est délimitée par un orifice s'étendant sur une zone locale de ladite paroi opposée.

Le dispositif d'injection (non représenté sur les figures) est adapté pour injecter le fluide de lubrification 22 dans le palier d'entraînement 18.

Le dispositif d'injection est en particulier adapté pour injecter le fluide de lubrification 22 a une pression d'injection donnée.

Le dispositif d'injection est configuré pour injecter le fluide de lubrification 22 dans une conduite ménagée dans le premier flasque 28 et qui débouche dans la chambre de répartition 36 par l'entrée 40.

Un procédé de lubrification du palier d'entraînement 18 est décrit par la suite.

Avantageusement le procédé de lubrification est mis en oeuvre lorsque l'arbre 10 est immobile, c'est-à-dire moteur à l'arrêt.

En outre, un tel procédé de lubrification est mis en oeuvre lors d'une opération de lubrification du palier d'entraînement 18.

Lors de l'opération de lubrification aussi appelée « opération de re-graissage », du fluide de lubrification 22 neuf est injecté dans le palier d'entraînement 18 afin de remplacer le fluide de lubrification 22 initialement présent (nommé ci-après « ancien fluide de lubrification 22 ») dans le palier d'entraînement 18. En particulier, lors de l'injection, le fluide de lubrification 22 neuf pousse l'ancien fluide de lubrification 22.

En référence aux figures 2 à 4, la portion mobile 60 du répartiteur 38 est initialement dans la position déployée.

La portion mobile 60 ferme donc la chambre de répartition 36 et le passage 64.

Le dispositif d'injection injecte le fluide de lubrification 22 neuf dans le palier d'entraînement 18.

Le fluide de lubrification 22 neuf entre dans le palier d'entraînement 10 via l'entrée 40.

Le fluide de lubrification 22 neuf entre dans la chambre de répartition 36 et se répartit dans une portion de la chambre de répartition 36 du fait que le répartiteur 38 est dans la position déployée.

Une fois que la pression d'au moins une partie du fluide de lubrification 22 présent dans la chambre de répartition 36 atteint la pression prédéterminée pour la portion mobile 60, le fluide de lubrification 22 exerce cette pression prédéterminée sur au moins un secteur angulaire de la portion mobile 60. Ce secteur angulaire de la portion mobile 60 passe alors de la position déployée dans la position rétractée.

Avantageusement, le secteur angulaire de la portion mobile 60 dans la position rétractée s'étend sur une distance angulaire comprise entre 90 degrés et 360 degrés, de préférence entre 180 degrés et 360 degrés et encore préférentiellement entre 270 degrés et 360 degrés.

Par exemple, le secteur angulaire de la portion mobile 60 dans la position rétractée s'étend sur une distance angulaire de 360 degrés. Autrement dit, l'ensemble de la portion mobile 60 est dans la position rétractée.

Dans le cas d'espèce, lors du passage de la position déployée à la position rétractée, la portion mobile 60 se déforme élastiquement par rapport à sa forme dans la position déployée.

En outre, lors du passage de la position déployée dans la position rétractée, la portion mobile 60 se déforme par rapport à sa forme dans la position déployée, permettant le passage du fluide de lubrification 22 de la chambre de répartition 36 dans la chambre d'alimentation amont 34A.

Dans le cas d'espèce, lors du passage de la position déployée dans la position rétractée, la portion mobile 60 se déforme par rapport à sa forme dans la position déployée dans une direction l'éloignant de la deuxième paroi 56. En particulier, la portion mobile 60 se déforme selon une direction radiale, la direction radiale étant définie par la direction du rayon du cercle délimité par la portion mobile 60. Autrement dit, la portion mobile 60 se déforme en direction de l'intérieur de la chambre d'alimentation 36, c'est-à-dire en direction de l'axe transversal X.

La portion fixe 62 ne se déforme pas de sorte que du fluide de lubrification 22 peut passer entre la portion fixe 62 et la première paroi 54.

Lorsque ledit secteur angulaire de la portion mobile 60 est dans la position rétractée, la passage 64 est formé entre ledit secteur angulaire de la portion mobile 60 dans la position rétractée et la deuxième paroi 56.

Le fluide de lubrification 22 contenu dans la chambre de répartition 36 circule alors dans le passage 64 délimité entre le secteur angulaire de la portion mobile 60 dans la position rétractée et la deuxième paroi 56.

Le fluide de lubrification 22 neuf atteint la chambre d'alimentation amont 34A en passant par le passage 64 annulaire (figure 5). Puis, le fluide de lubrification 22 neuf franchit l'organe de guidage 32 (un tel franchissement est représenté sur la figure 3 par les flèches en pointillés) et atteint la chambre d'alimentation aval 34B (visible sur la figure 2). De cette manière, le fluide de lubrification 22 neuf pousse l'ancien fluide de lubrification 22.

Puis, l'ancien fluide de lubrification 22 poussé par le fluide de lubrification 22 neuf sort du palier d'entraînement 18 par la sortie 42 du fluide de lubrification 22 (une telle sortie est représentée sur la figure 3 en pointillés).

Grâce à la chambre de répartition 36 et au répartiteur 38, le fluide de lubrification 22 neuf se répartit d'abord dans une portion de la chambre de répartition 36 avant d'atteindre la chambre d'alimentation 34 pour alimenter l'organe de guidage 32.

Autrement dit, dans le plan de coupe transversal, le fluide de lubrification 22 neuf se répartit angulairement sur une portion angulaire autour de l'organe de guidage 32 dans la chambre de répartition 36 avant d'atteindre l'organe de guidage 32.

Ainsi, le passage 64 s'étendant sur une distance angulaire, il permet une bonne répartition du fluide de lubrification 22 angulairement autour de l'axe transversal X et donc une alimentation angulairement répartie de la chambre d'alimentation 34.

Il en résulte une circulation du fluide de lubrification 22 à travers une plus grande portion angulaire de l'organe de guidage 32 par rapport à l'état de la technique.

Ainsi, un secteur angulaire plus important de l'organe de guidage 32 est alimenté en fluide de lubrification 22 neuf comparativement à la solution de l'état de la technique.

Il en résulte donc un remplacement optimal de l'ancien fluide de lubrification 22 par du fluide de lubrification 22 neuf autour de l'organe de guidage 32.

Le procédé de lubrification selon l'invention nécessite un seul opérateur comparativement à la solution existante dans le cas d'un moteur à l'arrêt. En outre, l'opération de lubrification est particulièrement simple à mettre en oeuvre.

Il en résulte une maintenance simplifiée du palier d'entraînement 18 ainsi que des opérations de lubrification plus éloignées les unes des autres dans le temps.

Un autre mode de réalisation du palier d'entraînement 18 non représenté sur les figures est décrit par la suite.

Le palier d'entraînement 18 de ce mode de réalisation est décrit uniquement par différence au mode de réalisation du palier d'entraînement décrit précédemment.

En particulier, le palier d'entraînement 18 de ce mode de réalisation diffère du palier d'entraînement 18 décrit précédemment uniquement par le répartiteur 38.

La portion mobile 60 du répartiteur 38 présente au moins une première zone et une deuxième zone, distincte de la première zone.

La première zone définit un premier secteur angulaire non nul de la portion mobile 60.

La deuxième zone définit un deuxième secteur angulaire non nul de la portion mobile 60.

La première zone est adaptée pour passer de la position déployée à la position rétractée lorsque le fluide de lubrification présent dans la chambre de répartition 36 exerce une première pression prédéterminée sur ladite première zone.

En outre, la deuxième zone est adaptée pour passer de la position déployée à la position rétractée lorsque le fluide de lubrification présent dans la chambre de répartition 36 exerce une deuxième pression prédéterminée sur la deuxième zone, la première pression étant distincte de la deuxième pression

A titre d'exemple, la deuxième zone est une zone située à une distance plus importante d'un centre de l'entrée 40 par rapport à la première zone.

Par exemple, la raideur de la première zone est supérieure à la raideur de la deuxième zone.

Par exemple, la première pression prédéterminée est supérieure à la deuxième pression prédéterminée.

Un tel répartiteur permet de compenser une éventuelle différence de pression du fluide de lubrification 22 dans la chambre de répartition 36 lors de l'injection du fluide de lubrification 22 dans la chambre de répartition 36.

## Revendications

1. Palier d'entraînement (18) d'un arbre (10), notamment d'un moteur (8) de traction d'un véhicule ferroviaire, l'arbre (10) s'étendant selon un axe transversal (X), le palier d'entraînement (18) étant destiné à être lubrifié par un fluide de lubrification (22), le palier d'entraînement (18) comprenant :
- un organe de guidage (32) en rotation de l'arbre (10) autour de l'axe transversal (X), l'organe de guidage (32) présentant une forme annulaire et s'étendant circonférentiellement autour de l'axe transversal (X), l'organe de guidage (32) délimitant un logement traversant le long de l'axe transversal (X), le logement étant configuré pour recevoir l'arbre (10),
- une entrée (40) du fluide de lubrification (22) dans le palier d'entraînement (18),
- une sortie (42) du fluide de lubrification (22) à l'extérieur du palier d'entraînement (18), le fluide de lubrification (22) étant apte à circuler depuis l'entrée (40) vers la sortie (42) en passant à travers l'organe de guidage (32),
- une chambre annulaire d'alimentation (34) en fluide de lubrification (22) de l'organe de guidage (32), la chambre annulaire d'alimentation (34) étant agencée circonférentiellement autour de l'axe transversal (X) en aval de l'entrée (40) et en amont de la sortie (42) par rapport à la circulation du fluide de lubrification (22), l'organe de guidage (32) étant agencé dans la chambre annulaire d'alimentation (34),
le palier d'entraînement (18) étant **caractérisé en ce qu'**il comprend, en outre :
- une chambre annulaire de répartition (36) du fluide de lubrification (22) dans laquelle débouche l'entrée (40), la chambre annulaire de répartition (36) étant agencée circonférentiellement autour de l'axe transversal (X) en aval de l'entrée (40) et en amont de la chambre d'alimentation (34) par rapport à la circulation du fluide de lubrification (22), et
- un répartiteur (38) annulaire de fluide de lubrification (22) agencé circonférentiellement autour de l'axe transversal (X) s'étendant entre la chambre de répartition (36) et la chambre d'alimentation (34), le répartiteur (38) comprenant une portion mobile (60) déplaçable entre une position déployée dans laquelle le répartiteur (38) ferme la chambre annulaire de répartition (36) de sorte à répartir le fluide de lubrification (32) dans une portion de la chambre annulaire de répartition (36) et une position rétractée dans laquelle le répartiteur (38) autorise le passage du fluide de lubrification (22) de la chambre annulaire de répartition (36) dans la chambre annulaire d'alimentation (34).

2. Palier d'entraînement (18) selon la revendication 1, dans lequel la portion mobile (60) dans la position déployée présente une forme biseautée dans un plan de coupe transversal comprenant l'axe transversal (X).

3. Palier d'entraînement (18) selon la revendication 1 ou 2, dans lequel la portion mobile (60) est configurée pour passer de la position déployée à la position rétractée lorsque le fluide de lubrification (22) dans la chambre annulaire de répartition (36) exerce une pression prédéterminée sur la portion mobile (60).

4. Palier d'entraînement (18) selon l'une quelconque des revendications précédentes, dans lequel la portion mobile (60) dans la position déployée présente une forme annulaire, la portion mobile (60) s'étendant circonférentiellement autour de l'axe transversal (X).

5. Palier d'entraînement (18) selon l'une quelconque des revendications précédentes, dans lequel la portion mobile (60) du répartiteur (38) présente au moins une première zone et une deuxième zone distincte de la première zone, la première zone définissant un premier secteur angulaire non nul de la portion mobile (60) et la deuxième zone définissant une deuxième secteur angulaire non nul de la portion mobile (60), la première zone de la portion mobile (60) du répartiteur (38) étant configurée pour passer de la position déployée à la position rétractée lorsque le fluide de lubrification (22) dans la chambre annulaire de répartition (36) exerce une première pression prédéterminée sur ladite première zone et la deuxième zone de la portion mobile (60) du répartiteur (38) étant configurée pour passer de la position déployée à la position rétractée lorsque le fluide de lubrification (22) dans la chambre annulaire de répartition (36) exerce une deuxième pression prédéterminée sur la deuxième zone, la première pression prédéterminée étant distincte de la deuxième pression prédéterminée.

6. Palier d'entraînement (18) selon l'une quelconque des revendications précédentes, dans lequel le répartiteur (38) présente, en outre, une portion fixe (62) par rapport à la portion mobile (60), la portion mobile (60) étant venue de matière avec la portion fixe (62) et étant flexible par rapport à la portion fixe (62).

7. Palier d'entraînement (18) selon la revendication 6, dans lequel la chambre annulaire d'alimentation (34) et la chambre annulaire de répartition (36) sont délimitées au moins en partie par une première paroi (54) et une deuxième paroi (56) séparées l'une de l'autre selon la direction transversale (X), le répartiteur (38) s'étendant entre la première paroi (56) et la deuxième paroi (56), la portion fixe (62) étant agencée contre la première paroi (54) et la portion mobile (60) étant agencée en contact avec la deuxième paroi (56) dans la position déployée du répartiteur (38), la portion fixe (62) étant agencée contre la première paroi (54) et la portion mobile (60) étant agencée à distance de la deuxième paroi (56) dans la position rétractée du répartiteur (38).

8. Palier d'entraînement (18) selon la revendication 7, dans lequel la première paroi (54) présente une gorge (58) dans laquelle le répartiteur (38) est monté.

9. Palier d'entraînement (18) selon la revendication 7 ou 8, dans lequel la portion mobile (60) et la deuxième paroi (56) délimitent entre eux un passage (64) du fluide de lubrification (22) de la chambre annulaire de répartition (36) dans la chambre annulaire d'alimentation (34) dans la position rétractée de la portion mobile (60), une distance séparant l'axe transversal (X) du passage (64) étant strictement supérieure à une distance séparant l'axe transversal (X) de l'organe de guidage (32).

10. Moteur (8) pour un véhicule ferroviaire comprenant :
- un carter (12),
- un arbre (10) s'étendant transversalement selon la direction transversale (X), l'arbre (10) étant monté mobile en rotation par rapport au carter (12) autour de l'axe transversal (X) et l'arbre (10) traversant le carter (12),
- un palier d'entraînement (18) selon l'une quelconque des revendications précédentes, le palier d'entraînement (18) étant monté entre le carter (12) et l'arbre (10) pour guider la rotation de l'arbre (10) par rapport au carter (12), et
- un dispositif d'injection d'au moins un fluide de lubrification (22) du palier d'entraînement (18).
